# EUROPÄISCHE PATENTSCHRIFT

(11) **EP 3 491 346 B1**
(45) Veröffentlichungstag und Bekanntmachung des Hinweises auf die Patenterteilung: **16.02.2022**
(21) Anmeldenummer: 17745259.6
(22) Anmeldetag: 27.07.2017
(51) Int. Cl.: G01G 7/04

(54) **BLUTBEHANDLUNGSGERÄT UND VERFAHREN ZUR PRÜFUNG EINES WÄGESYSTEMS EINES BLUTBEHANDLUNGSGERÄTES**
BLOOD TREATMENT DEVICE AND METHOD FOR TESTING A WEIGHING SYSTEM OF A BLOOD TREATMENT DEVICE
DISPOSITIF DE TRAITEMENT DU SANG ET PROCÉDÉ DE CONTRÔLE D'UN SYSTÈME DE PESÉE D'UN DISPOSITIF DE TRAITEMENT DU SANG

(30) Priorität: 27.07.2016 DE 102016009098
(43) Veröffentlichungstag der Anmeldung: 05.06.2019
(73) Patentinhaber: Fresenius Medical Care Deutschland GmbH, 61352 Bad Homburg (DE)
(72) Erfinder: MERTEN, Kai, 97537 Wipfeld (DE); HEDMANN, Frank, 97332 Volkach (DE)
(74) Vertreter: Herrmann, Uwe
(86) Internationale Anmeldenummer: PCT/EP2017/000911
(87) Internationale Veröffentlichungsnummer: WO 2018/019423

(56) Entgegenhaltungen:
- US-A1- 2016 011 038

## Beschreibung

Die vorliegende Erfindung betrifft ein Blutbehandlungsgerät mit einer Vorrichtung zur Prüfung eines Wägesystems, wobei das Wägesystem zumindest eine Wägezelle aufweist.

Bei verschiedenen Blutbehandlungsverfahren, wie beispielsweise bei Dialyseverfahren besteht die Notwendigkeit, eine gewichtsmäßige Bilanzierung von Lösungen vorzunehmen, um einen korrekten Behandlungsverlauf sicherzustellen. Die dazu eingesetzten Waagen stellen sicherheitsrelevante Bestandteile eines Blutbehandlungssystems dar, so dass deren Messwerte im Rahmen von Testphasen einer Plausibilitätsprüfung unterzogen werden müssen.

Bekannt ist es, diesen Test initial vor einer Behandlung durchzuführen sowie auch im Rahmen des Behandlungsverlaufes einen oder mehrere Tests durchzuführen. Insbesondere bei längeren Behandlungen schränken die Testphasen allerdings die Behandlungsverfügbarkeit ein, wenn die Behandlung für den Test unterbrochen werden muss.

Aus dem Stand der Technik ist es bekannt, einen initialen Test so durchzuführen, dass bei entlastetem Wägesystem, d.h. in einem Zustand, in dem keine Lösungsbeutel aufgelegt sind, automatisiert ein Testgewicht in Form eines bekannten Prüfgewichts aufgelegt wird. Aus dem seitens der Wägezelle abgegebenen Signal lässt sich somit eine Plausibilitätsprüfung vornehmen, da das Prüfgewicht bekannt ist. Dieser Test wird zu bestimmten Zeitpunkten während der Behandlung wiederholt, was voraussetzt, dass sich das durch den oder die Lösungsbeutel, die auf der Waagschale aufgelegt sind, bedingte Gewicht zeitlich konstant ist, d.h. der Fluss in den und aus dem Lösungsbeutel wird während der Durchführung des Tests gestoppt.

Die Nachteile dieser Vorgehensweise bestehen darin, dass nur mit einer konstanten Gewichtsänderung gearbeitet werden kann, dass durch das Auflegen des Prüfgewichts Schwingungen (Impulse) auf der Waage entstehen, d.h. es sind bei der Durchführung des Tests definierte Bedingungen im System herzustellen, die Verfügbarkeit des Blutbehandlungssystems ist während des Tests eingeschränkt und es entstehen durch das Auflegen des Prüfgewichts Geräusche.

Aus dem Stand der Technik ist auch eine kontinuierliche Plausibilitätsprüfung bekannt, bei der keine Unterbrechung der Behandlung notwendig ist. Diese Prüfung erfolgt mittels der verbauten Schlauchrollenpumpe des Gerätes. Dabei wird die Fördermenge der Pumpe(n) in Relation zu der Gewichtsänderung gesetzt, die durch die Wägezelle der Waage ermittelt wird. Mit dieser Vorgehensweise kann zwar eine kontinuierliche Prüfung vorgenommen werden, während die Behandlung im Gange ist, jedoch bestehen auch Nachteile: die Fördergenauigkeit der Schlauchrollenpumpen ist weit geringer als die Messauflösung der Waage bzw. der Wägezelle, bei einem Zusammenschalten mehrerer Waagen ist nicht erkennbar, welche Waage fehlerhaft ist, eine Flussunterbrechung, wie beispielsweise durch eine abgeknickte Beutelleitung oder einen Verschluss des Beutels, kann nicht eindeutig von einem Fehler der Waage unterschieden werden, ein identifizierter Fehler beruht stets auf der Annahme, dass seit dem letzten erfolgreichen Waagentest das Wägesystem fehlerfrei bleibt. Daher ist eine definitive Unterscheidung zwischen Flussunterbrechung und einem Waagenfehler nicht eindeutig zu einem bestimmten Zeitpunkt möglich.

Aus dem Stand der Technik sind Systeme bekannt, die sich mit Kraft kompensierenden Wägesystemen befassen.

Die GB 1324499 offenbart eine Kraftmessvorrichtung, insbesondere eine Waage, bei der von der Größe einer Kraft abhängige Auslenkungen aus einer Nulllage mittels einer elektrischen Lagenabtastung einen einer elektromagnetischen, der Auslenkung entgegenwirkenden Kompensationseinrichtung zugeführten Strom steuern.

Aus der US 2016/0011038 ist eine Kraftmessvorrichtung mit einem feststehenden Parallelschenkel und einem die Last eines aufgelegten Wägeguts aufnehmenden beweglichen Parallelschenkel bekannt, der mit einem Messaufnehmer verbunden ist.

Die EP 2607866 offenbart eine Wägezelle nach dem Prinzip der elektromagnetischen Kraftkompensation mit einem feststehenden Basisteil, einem am Basisteil beweglich gelenkten Lastaufnehmer zur Aufnahme der Gewichtskraft einer zu wägenden Last, ein am Basisteil festgelegtes Permanentmagnetsystem mit einem Luftspalt sowie eine im Luftspalt bewegliche und von einem Kompensationsstrom durchflossene Spule.

Aus der US 4,179,005 ist eine Waage mit elektromagnetischer Lastkompensation, umfassend ein Permanentmagnetsystem und wenigstens eine in dessen Luftspalt angeordnete stromdurchflossene Spule bekannt, wobei im Permanentmagnetsystem, elektrisch von diesem isoliert, eine vom Magnetkern durchstoßene geschlitzte Metallplatte angeordnet ist, die durch eine Öffnung im Permanentmagnetsystem mit der Sekundärwicklung eines Transformators verbindbar ist.

Die EP 0364645 betrifft einen Dynamometer mit elektromagnetischer Eichung.

Aus der US 3,786,883 ist eine Waage bekannt, umfassend einen Lastteil und einen Referenzteil, die unabhängig voneinander vertikal beweglich am festen Teil der Waage aufgehängt sind und je eine in einem gemeinsamen Magnetfeld angeordnete Kompensationsspule aufweisen, wobei Detektoren die belastungsabhängigen Auslenkungen von Last- und Referenzteil aus einer Nulllage feststellen und über Regelkreise Ströme in den Kompensationsspulen regeln, durch deren elektromagnetische Kraftwirkung Last- und Referenzteil jeweils für sich in die Nulllage zurückgeführt werden, wobei Schaltmittel vorgesehen sind, welche den durch die Referenzspule fließenden Gleichstrom abhängig vom Detektorsignal des Lastteils entweder der Lastspule oder einem Blindverbraucher zuleiten.

Die EP 2 784 454 A1 offenbart eine Vorrichtung zur Prüfung eines Wägesystems, wobei das Wägesystem zumindest eine Wägezelle aufweist, wobei die Vorrichtung wenigstens einen Stößel, wenigstens eine Spule, die wenigstens einen Hohlraum aufweist, in der der Stößel beweglich aufgenommen ist, sowie wenigstens eine Stromquelle umfasst, die die Spule zumindest zeitweise mit Strom beaufschlagt, wobei die Spule oder der Stößel an dem Wägesystem angeordnet ist, um auf die Wägezelle eine definierte Kraft aufzubringen, wenn die Spule von Strom durchflossen wird.

Der vorliegenden Erfindung liegt die Aufgabe zugrunde, ein Verfahren und eine Vorrichtung bereitzustellen, mittels derer eine zuverlässige Plausibilitätsprüfung eines Wägesystems vorgenommen werden kann.

Diese Aufgabe wird durch ein Blutbehandlungsgerät mit den Merkmalen des Anspruchs 1 sowie durch ein Verfahren mit den Merkmalen des Anspruchs 6 gelöst.

Erfindungsgemäß ist vorgesehen, dass die Vorrichtung zur Prüfung des Wägesystems des Blutbehandlungsgeräts wenigstens einen Stößel, wenigstens eine Spule, die wenigstens einen Hohlraum aufweist, in der der Stößel beweglich aufgenommen ist, sowie wenigstens eine Stromquelle umfasst, die die Spule zumindest zeitweise mit Strom beaufschlagt, wobei die Spule oder der Stößel an dem Wägesystem angeordnet ist, um auf die Wägezelle eine definierte Kraft aufzubringen, wenn die Spule von Strom durchflossen wird.

Der fließende Strom baut ein Magnetfeld auf, welches auf den Stößel eine definierte Kraft ausübt. Diese Kraft kann mittels der Wägezelle detektiert werden.

Die stromdurchflossene Spule übt somit auf den Stößel in Abhängigkeit von der aufgebrachten Stromstärke eine definierte Kraft aus. Aufgrund der Anordnung der Spule oder des Stößels an dem Wägesystem, wie beispielsweise an der Wägezelle, an der Waagschale oder an einem Verbindungsteil zwischen Wägezelle und Waagschale wird diese Kraft unmittelbar oder mittelbar auf die Wägezelle übertragen.

Da die Stromstärke sowie der Zusammenhang zwischen der Stromstärke und der wirkenden Kraft bekannt sind, kann ermittelt werden, ob das von der Wägezelle abgegebene Messsignal dieser Kraft entspricht oder nicht bzw. in einem Bereich liegt, der als plausibel bezeichnet werden kann. Ist dies nicht der Fall, kann eindeutig auf einen Fehler der Wägezelle oder eines sonstigen Teiles des Wägesystems geschlossen werden, andernfalls kann die Wägezelle bzw. das Wägesystem als in Ordnung qualifiziert werden.

Dieser Test kann jederzeit durchgeführt werden, d.h. sowohl vor als auch nach als auch während einer Behandlung. Von besonderem Vorteil ist es, erfindungsgemäss, dass der Test während einer Behandlung durchgeführt wird, ohne dass dazu die Behandlung unterbrochen werden muss oder in irgendeiner Weise beeinträchtigt wird. Somit wird während des Wägeprozesses kontinuierlich das Wägesystem bzw. die Wägezelle überprüft.

Der Begriff "Wägesystem" oder "Waage" umfasst das gesamte System, dass zur Gewichtsermittlung erforderlich ist, vorzugsweise eine oder mehrere Waagschalen, die vorzugsweise zur Aufnahme eines oder mehrerer Lösungsbeutel dienen, eine oder mehrere Wägezellen, die ein oder mehrere Signale abgeben, die für das auf der Waagschale aufliegende Gewicht charakteristisch sind, sowie die mechanische Verbindung, wie beispielsweise wenigstens ein Gestänge, das die Waagschale mit der Wägezelle verbindet.

Ist das von der Wägezelle abgegebene Signal nicht plausibel, kann das seine Ursache beispielsweise darin haben, dass die Wägezelle defekt ist oder beispielsweise auch darin, dass die Verbindung zwischen der Waagschale und der Wägezelle nicht in Ordnung, z.B. verklemmt ist. Der letztgenannte Fehler kann beispielsweise dadurch detektiert werden, dass der Stößel oder die Spule an der Waagschale angeordnet sind und die Wägezelle kein Signal abgibt, das im Hinblick auf die auf die Waagschale aufgebrachte Kraft plausibel ist.

Grundsätzlich ist es denkbar, dass der Strom, der die Spule durchströmt zeitlich konstant ist. Bevorzugt ist jedoch ein zeitlich variabler Strom.

Die Verwendung eines sich stetig nach einer bekannten Vorschrift ändernden Testsignals bzw. Stromwertes, z.B. eines Sinussignals bzw. eines sinusförmigen verlaufenden Stromsignals, vermeidet die Entstehung von Impulsen, die unerwünschte Schwingungen auf das Messsystem ausüben.

Dabei ist die Frequenz des Signals vorzugsweise so zu wählen, dass keine Resonanzen auftreten, wie z.B. 0,2 Hz. Die Amplitude des Signals bestimmt den Grad der Kraftänderung.

Der erwartete Zustand des Messsignals, d.h. des von der Wägezelle ausgegeben Signals oder eines darauf basierenden Signals, kann zu einem definierten Zeitpunkt durch den gewählten Stromverlauf vorherbestimmt und ausgewertet werden.

Erfindungsgemäß ist vorgesehen, dass die Stromquelle derart ausgebildet ist, dass die Spule mit Strom dauerhaft oder zeitweise beaufschlagt wird, wenn das Blutbehandlungsgerät in Betrieb ist, d.h. die Blutbehandlung, wie z.B. eine Dialysebehandlung gerade läuft. Die Strombeaufschlagung kann während der gesamten Behandlung erfolgen oder phasenweise bzw. nur in einem oder mehreren Zeitabschnitten der Behandlung.

Die Vorrichtung weist vorzugsweise zumindest eine Auswerteeinheit auf, die ausgebildet ist, das von der Wägezelle gemessene Signal in Relation zu der Stromstärke zu setzen, mit der die Spule beaufschlagt wird. Darauf basierend kann dann festgestellt werden, ob das von der Wägezelle gemessene Signal plausibel ist oder nicht.

Die Vorrichtung kann in einer weiteren Ausgestaltung der Erfindung zumindest eine Auswerteeinheit umfassen, die ausgebildet ist, von dem seitens der Wägezelle gemessenen Signal ein Nutzsignal abzuziehen und die Differenz aus beiden Signalen in Relation zu der Stromstärke zu setzen, mit der die Spule beaufschlagt wird.

Unter einem "Nutzsignal" ist das Signal der Wägezelle zu verstehen, das auf das Gewicht des auf der Waagschale aufliegenden Gegenstandes, insbesondere eines oder mehrerer Lösungsbeutel zurückgeht. Liegt auf der Waagschale kein Lösungsbeutel oder dergleichen auf, ist das Nutzsignal 0, andernfalls > 0.

Die Wägezelle misst nicht nur das auf der Waagschale aufliegende Gewicht, sondern auch das Gewicht bzw. die Kraft, die durch den Stößel bzw. die Spule aufgebracht wird. Das von der Wägezelle abgegebene Signal basiert somit auf beiden Gewichten. Wird von dem Signal, das die Wägezelle abgibt, das Nutzsignal abgezogen, verbleibt das Signal, das auf die Kraft zurückgeht, die von der Spule erzeugt wird. Dieses Signal kann zur Prüfung der Plausibilität herangezogen werden.

Bei dem Blutbehandlungsgerät kann es sich insbesondere um ein Dialysegerät, wie z.B. ein Peritonealdialysegerät, ein Hämodialysegerät, ein Hämofiltrationsgerät oder ein Hämodiafiltrationsgerät handeln. Es umfasst wenigstens ein Wägesystem, das vorzugweise zur Ermittlung des Gewichts einer Lösung, insbesondere einer Dialyselösung, bestimmt ist, wobei das Wägesystem wenigstens eine Wägezelle aufweist, die zumindest ein Signal ausgibt, das für das auf dem Wägesystem befindliche Gewicht charakteristisch ist, wobei das Blutbehandlungsgerät mit wenigstens einer wie vorbeschriebenen Vorrichtung ausgeführt ist.

Das Wägesystem des Blutbehandlungsgerätes dient vorzugsweise zur Gewichtsermittlung bzw. zur Ermittlung der Gewichtsänderung von Lösungsbeuteln. Bei diesen Lösungsbeuteln kann es sich um solche handeln, die frische Dialyselösung enthalten, die dem Patienten bzw. dem Dialysefilter zugeführt wird, die gebrauchte Dialyselösung enthalten, die von dem Patienten bzw. von dem Dialysefilter abgeführt wird, oder auch um solche, die eine andere Lösung, wie z.B. eine Substitutionsflüssigkeit enthalten, die dem Blut des Patienten als Ersatz für das entzogene Flüssigkeitsvolumen zugeführt wird. Auch andere Lösungen sind denkbar und von der Erfindung umfasst.

Die vorliegende Erfindung betrifft des Weiteren ein Verfahren zur Prüfung eines Wägesystems eines Blutbehandlungsgerätes, insbesondere eines Dialysegerätes, wobei das Wägesystem zumindest eine Wägezelle aufweist, wobei wenigstens ein Stößel und wenigstens eine Spule vorhanden sind, die wenigstens einen Hohlraum aufweist, in der der Stößel beweglich aufgenommen ist, wobei die Spule oder der Stößel an dem Wägesystem angeordnet ist, wobei das Verfahren das Beaufschlagen der Spule mit Strom sowie die Erfassung des von der Wägezelle ausgegebenen Signals umfasst.

Wie oben ausgeführt, ist es von Vorteil, wenn die Spule mit einem zeitlich variablen Strom beaufschlagt wird. Von der Erfindung ist jedoch auch der Fall umfasst, dass die Stromstärke und damit die von der Spule erzeugte Kraft zeitlich konstant ist.

Eine bevorzugte Ausgestaltung des Verfahrens sieht vor, dass der Verlauf der Stromstärke, mit der die Spule beaufschlagt wird, über die Zeit sinusförmig ist. Dementsprechend ergibt sich auch ein sinusförmiger Verlauf der Kraft, die von der Spule erzeugt wird.

Wie bereits oben ausgeführt, ist erfindungsgemäß vorgesehen, dass die Strombeaufschlagung während der Blutbehandlung erfolgt. Die Beaufschlagung der Spule mit Strom kann sich über die gesamte Behandlungsdauer oder auch nur über einen oder mehrere Intervalle der Blutbehandlung erstrecken.

Vorzugsweise wird das von der Wägezelle gemessene Signal in Relation zu der Stromstärke gesetzt wird, mit der die Spule beaufschlagt wird.

An dieser Stelle wird darauf hingewiesen, dass im Rahmen der vorliegenden Erfindung der Begriff "Signal" das Signal als solches sowie auch darauf basierende bzw. damit korrelierte Größen umfasst. So kann beispielsweise das Signal ein Strom- oder Spannungswert und die darauf basierende Größe eine Kraft oder Masse sein.

Ebenso ist darauf hinzuweisen, dass im Rahmen der vorliegenden Erfindung der Begriff "Stromstärke" die Stromstärke als solche umfasst, jedoch auch jeden darauf basierenden oder damit korrelierten Wert, wie z.B. die Spannung umfasst.

In einer weiteren bevorzugten Ausgestaltung der Erfindung wird von dem seitens der Wägezelle gemessenen Signal ein Nutzsignal abgezogen und die Differenz aus beiden Signalen in Relation zu der Stromstärke gesetzt, mit der die Spule beaufschlagt wird.

Weitere Einzelheiten und Vorteile werden anhand eines in der Zeichnung beschriebenen Ausführungsbeispiels näher erläutert.

Es zeigen:
- Figur 1:: eine schematische Ansicht eines Wägesystems in einer ersten Ausführungsform mit an der Wägezelle fixiertem Stößel,
- Figur 2:: eine schematische Ansicht eines Wägesystems in einer zweiten Ausführungsform mit an der Wägezelle fixierter Spule,
- Figur 3:: schematische Ansicht eines Wägesystems in einer dritten Ausführungsform mit gebogenem Stößel und gebogener Spule,
- Figur 4:: schematische Ansicht eines Wägesystems in einer vierten Ausführungsform mit an der Wägezelle beweglich gelagertem Stößel,
- Figur 5:: Verläufe der Kraft und der Stromstärke über die Zeit für verschiedene Szenarien.

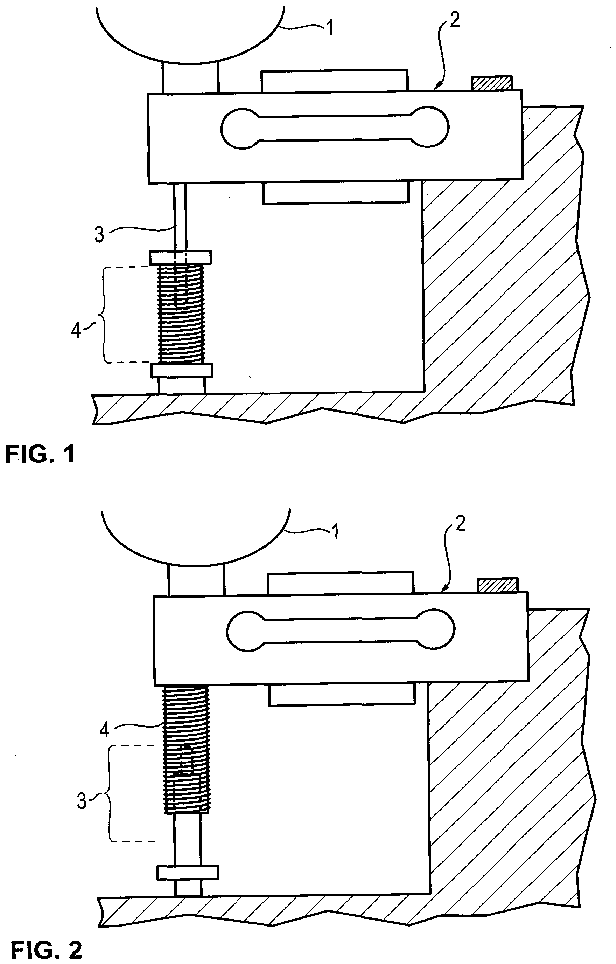

Figur 1 zeigt mit dem Bezugszeichen 1 eine Waagschale z.B. eines Peritonealdialysgerätes. Während der Dialysebehandlung befinden sich auf der Waagschale 1 ein oder mehrere Lösungsbeutel.

Die Waagschale 1 steht mit einer Wägezelle 2 derart in Verbindung, dass das auf der Waagschale 1 lastende Gewicht von der Wägezelle 2 erfasst wird. Die Wägezelle 2 gibt ein Signal aus, das mit diesem Gewicht korreliert.

Bei der Wägezelle 2 handelt es sich gemäß der Erfindung um eine beliebige Einheit, die in der Lage ist, eine auf diese wirkende Kraft in ein Signal, insbesondere in ein elektrisches Signal umzuwandeln.

Unterhalb der Wägezelle 2 befindet sich an dieser fest angeordnet der Stößel 3, der hin und her bewegbar in dem Innenraum einer elektrischen Spule 4 aufgenommen ist. Die Spule 4 steht mit einer nicht dargestellten Stromquelle in Verbindung und wird von dieser mit Strom beaufschlagt.

Wird die Spule 4 von Strom durchflossen, übt das dadurch gebildete Magnetfeld auf den Stößel 3 eine Kraft (gemäß Figur 1 nach unten) aus, was dazu führt, dass auf die Wägezelle 2 eine entsprechende Kraft ausgeübt wird.

Diese Kraft wird von der Wägezelle 2 ebenso erfasst und in Form eines Signals ausgegeben.

Die Spule 4 ist feststehend angeordnet, d.h. bewegt sich relativ zu der Wägezelle nicht.

Figur 2 zeigt die umgekehrte Anordnung, bei der Spule 4 an der Wägezelle 2 angeordnet ist, wohingegen der Stößel 3 feststehend angeordnet ist, d.h. sich relativ zu der Wägezelle 2 nicht bewegt.

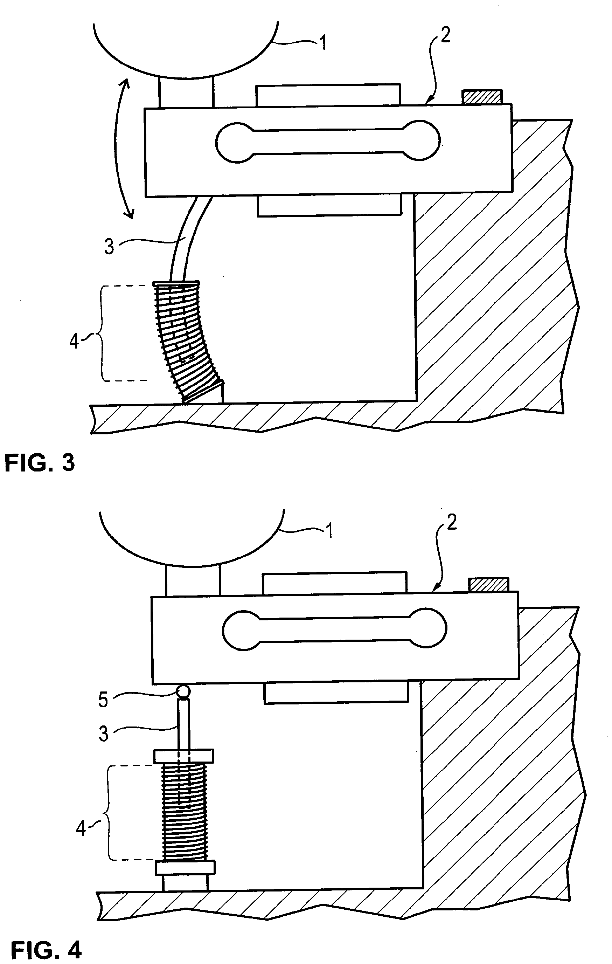

Aus Figur 3 ist eine Anordnung ersichtlich, bei der der Stößel 3 und die Spule 4 sichelförmig bzw. gekrümmt ausgebildet sind, um die Biegung zu kompensieren, die bei dem Wägevorgang auftreten kann. Figur 4 zeigt eine Anordnung, bei der der Stößel 3 nicht fest, sondern mittels der Lagerstelle 5 beweglich an der Wägezelle befestigt ist.

Die Ausführungen gemäß der Figuren 3 und 4 bieten die Möglichkeit, die Spaltmaße der Spule konstant zu halten und sehr eng zu tolerieren. Grundsätzlich kann auch bei den Ausführungen der Figuren 3 und 4 die Spule an der Wägezelle 2 angeordnet sein.

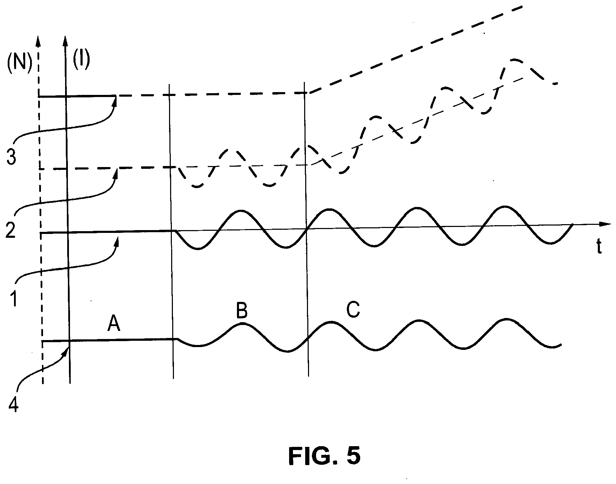

Figur 5 zeigt den Verlauf der Kraft über der Zeit für die folgenden Szenarien.

Die mit dem Bezugszeichen 1 gekennzeichnete Kurve zeigt die seitens der Wägezelle gemessene Kraft, wenn die Waagschale leer ist, d.h. auf die Wägezelle nur die durch die Spule erzeugte Kraft einwirkt. Ebenso ist es möglich, dass die Kurve 1 den Stromverlauf über die Zeit zeigt, mit dem die Spule beaufschlagt wird. In diesem Fall ist bzgl. der Kurve 1 auf der Ordinate die Stromstärke aufgetragen.

Die mit dem Bezugszeichen 2 gekennzeichnete Kurve zeigt die seitens der Wägezelle 2 gemessene Kraft, wenn die Waagschale 1 mit einem oder mehreren Lösungsbeuteln gefüllt ist, d.h. die Nutzlast und die durch die Spule erzeugte Kraft.

Zieht man von dem Verlauf 2 den sinusförmigen Anteil ab, erhält man den Kurvenverlauf 3, der somit die "gefilterte", d.h. um die seitens der Spule erzeugte Kraft bereinigte Nutzlast zeigt.

Zieht man von dem Verlauf 2 den Verlauf 3 ab, erhält man das gefilterte Signal 4, d.h. den Verlauf der Kraft, die die Wägezelle aufgrund der Spule erfährt.

Diese gefilterte Signal 4 stellt somit die Kraft über die Zeit dar, die die Wägezelle aufgrund der Beaufschlagung der Spule mit Strom erfährt.

Dieses Signal 4 kann somit zur Plausibilitätsprüfung herangezogen werden.

Da die Korrelation zwischen der Stromstärke durch die Spule und der von der Spule bzw. den Stößel auf die Wägezelle aufgebrachten Kraft bekannt ist, kann ermittelt werden, ob die gemessene Kraft gemäß Kurve 4 den erwarteten Werten entspricht oder zumindest in einem Toleranzbereich liegt. Diese Auswertung kann im Hinblick auf die Amplitude, d.h. auf die Größe der Kraft, und/oder im Hinblick auf die Frequenz vorgenommen werden.

Entspricht der gemessene Kraftverlauf dem erwarteten Kraftverlauf kann auf ein intaktes Wägesystem geschlossen werden.

Die Verläufe in Figur 5 sind in die drei Abschnitte A, B und C unterteilt. Dabei liegt in Abschnitt A noch kein Testsignal an, d.h. die Spule wird noch nicht mit Strom beaufschlagt, in Abschnitt B wird die Spule bereits mit Strom beaufschlagt, allerdings ist die Nutzlast, d.h. das Gewicht des in der Waage befindlichen Beutels konstant oder die Waage ist leer. In Abschnitt C nimmt die Nutzlast zu, d.h. ein in der Waagschale befindlicher Beutel füllt sich mit einer Lösung.

Wie dies aus Figur 5 hervorgeht, kann die beschriebene Plausibilitätsprüfung auch während der Behandlung durchgeführt werden, was sich in dem Beispiel daran zeigt, dass in Abschnitt C Lösung dem Beutel zugeführt wird. Bei dieser Lösung kann es sich beispielsweise um eine verbrauchte Dialyselösung handeln, die einem Patienten im Rahmen einer Peritonealbahndlung aus dem Bauchraum abgezogen und in dem Beutel aufgenommen wird.

In dem Beispiel gemäß Figur 5 erfolgt eine Gewichtszunahme durch die Füllung des Beutels. Die Beschriebene Plausibilitätsprüfung kann selbstverständlich ebenso durchgeführt werden, wenn ein Beutel entleert wird, d.h. eine Gewichtsabnahme vorliegt.

## Patentansprüche

1. Blutbehandlungsgerät, insbesondere Dialysegerät mit wenigstens einem Wägesystem, das vorzugweise zur Ermittlung des Gewichts wenigstens einer Lösung, insbesondere einer Dialyselösung, bestimmt ist, wobei das Wägesystem wenigstens eine Wägezelle aufweist, die zumindest ein Signal ausgibt, das für das auf dem Wägesystem befindlichen Gewicht charakteristisch ist, wobei das Blutbehandlungsgerät mit wenigstens einer Vorrichtung zur Prüfung des Wägesystems ausgefüht ist, wobei die Vorrichtung wenigstens einen Stößel, wenigstens eine Spule, die wenigstens einen Hohlraum aufweist, in der der Stößel beweglich aufgenommen ist, sowie wenigstens eine Stromquelle umfasst, die die Spule zumindest zeitweise mit Strom beaufschlagt, wobei die Spule oder der Stößel an dem Wägesystem angeordnet ist, um auf die Wägezelle eine definierte Kraft aufzubringen, wenn die Spule von Strom durchflossen wird, wobei die Stromquelle derart ausgebildet ist, dass die Spule mit Strom beaufschlagt wird, während das Blutbehandlungsgerät in Betrieb ist, d.h. während der Blutbehandlung.

2. Blutbehandlungsgerät nach Anspruch 1, **dadurch gekennzeichnet, dass** die Stromquelle derart ausgebildet ist, dass die Spule mit einem zeitlich variablen Strom beaufschlagt wird, wobei vorzugsweise vorgesehen ist, dass der Verlauf der Stromstärke sinusförmig ist.

3. Blutbehandlungsgerät nach einem der vorhergehenden Ansprüche, **dadurch gekennzeichnet, dass** die Stromquelle derart ausgebildet ist, dass die Spule kontinuierlich mit Strom beaufschlagt wird.

4. Blutbehandlungsgerät nach einem der vorherigen Ansprüche, **dadurch gekennzeichnet, dass** die Vorrichtung zumindest eine Auswerteeinheit umfasst, die ausgebildet ist, das von der Wägezelle gemessene Signal in Relation zu der Stromstärke zu setzen, mit der die Spule beaufschlagt wird.

5. Blutbehandlungsgerät nach einem der vorhergehenden Ansprüche, **dadurch gekennzeichnet, dass** die Vorrichtung zumindest eine Auswerteeinheit umfasst, die ausgebildet ist, von dem seitens der Wägezelle gemessenen Signal ein Nutzsignal abzuziehen und die Differenz aus beiden Signalen in Relation zu der Stromstärke zu setzen, mit der Spule beaufschlagt wird.

6. Verfahren zur Prüfung eines Wägesystems eines Blutbehandlungsgerätes insbesondere eines Dialysegerätes, wobei das Wägesystem zumindest eine Wägezelle aufweist und wenigstens ein Stößel und wenigstens eine Spule vorgesehen sind, die wenigstens einen Hohlraum aufweist, in der der Stößel beweglich aufgenommen ist, wobei die Spule oder der Stößel an dem Wägesystem angeordnet ist, wobei das Verfahren das Beaufschlagen der Spule mit Strom sowie die Erfassung des von der Wägezelle ausgegebenen Signals umfasst, wobei die Spule mit Strom beaufschlagt wird, während das Blutbehandlungsgerät in Betrieb ist, d.h. während der Blutbehandlung.

7. Verfahren nach Anspruch 6, **dadurch gekennzeichnet, dass** die Spule mit einem zeitlich variablen Strom beaufschlagt wird.

8. Verfahren nach Anspruch 6 oder 7, **dadurch gekennzeichnet, dass** der Verlauf der Stromstärke, mit der die Spule beaufschlagt wird, über die Zeit sinusförmig ist.

9. Verfahren nach einem der Ansprüche 6 bis 8, **dadurch gekennzeichnet, dass** die Spule kontinuierlich mit Strom beaufschlagt wird.

10. Verfahren nach einem der Ansprüche 6 bis 9, **dadurch gekennzeichnet, dass** das von der Wägezelle gemessene Signal in Relation zu der Stromstärke gesetzt wird, mit der die Spule beaufschlagt wird.

11. Verfahren nach einem der Ansprüche 6 bis 10, **dadurch gekennzeichnet, dass** von dem seitens der Wägezelle gemessenen Signal ein Nutzsignal abgezogen wird und die Differenz aus beiden Signalen in Relation zu der Stromstärke gesetzt wird, mit der Spule beaufschlagt wird.

## Claims

1. A blood treatment device, in particular a dialysis machine, having at least one weighing system, that is preferably designed for the determination of the weight of at least one solution, in particular a dialysis solution, wherein the weighing system has at least one load cell that emits at least one signal that is characteristic of the weight present on the weighing system , wherein the blood treatment device is configured with at least one apparatus for inspecting the weighing system, wherein the apparatus has at least one plunger, at least one coil ,which has at least one hollow space and in which the plunger is movably received, as well as at least one power source which applies current to the coil at least at times, wherein the coil or the plunger is arranged at the weighing system to apply a defined force to the load cell when the coil is flowed through by current,
wherein the current source is configured such that current is applied to the coil while the blood treatment device is in operation, i e. during the blood treatment-

2. A blood treatment device in accordance with claim 1, **characterized in that** the current source is configured such that a current variable in time is applied to the coil, with provision preferably being made that the progression of the current is sinusoidal.

3. A blood treatment device in accordance with one of the preceding claims, **characterized in that** the current source is configured such that current is continuously applied to the coil.

4. A blood treatment device in accordance with one of the preceding claims, **characterized in that** the apparatus comprises at least one evaluation unit which is configured to put the signal measured by the load cell into relation with the current which is applied to the coil.

5. A blood treatment device in accordance with one of the preceding claims, **characterized in that** the apparatus comprises at least one evaluation unit which is configured to deduct a wanted signal from the signal measured by the load cell and to put the difference from the two signals into relation with the current which is applied to the coil.

6. A method of inspecting a weighing system of a blood treatment device, in particular of a dialysis machine, wherein the weighing system has at least one load cell and at least one plunger and at least one coil are provided, the latter having at least one hollow space and the plunger being movably received in said coil, wherein the coil or the plunger is arranged at the weighing system, wherein the method comprises the application of current to the coil and the detection of the signal emitted by the load cell,
wherein current is applied to the coil while the blood treatment device is in operation, i e. during the blood treatment.

7. A method in accordance with claim 6, **characterized in that** the a current variable in time is applied to the coil.

8. A method in accordance with claim 6 or claim 7, **characterized in that** the progression of the current which is applied to the coil is sinusoidal over time.

9. A method in accordance with one of the claims 6 to 8, **characterized in that** current is continuously applied to the coil.

10. A method in accordance with one of the claims 6 to 9, **characterized in that** the signal measured by the load cell is put into relation with the current which is applied to the coil.

11. A method in accordance with one of the claims 6 to 10, **characterized in that** a wanted signal is deducted from the signal measured by the load cell and the difference from both signals is put into relation with the current which is applied to the coil.

## Revendications

1. Appareil de traitement du sang, en particulier appareil de dialyse comprenant au moins un système de pesée, qui est de préférence destiné à la détermination du poids d'au moins une solution, en particulier une solution de dialyse, le système de pesée comportant au moins une cellule de pesée, qui émet au moins un signal, qui est caractéristique pour le poids se trouvant sur le système de pesée, l'appareil de traitement du sang étant réalisé avec au moins un dispositif de contrôle du système de pesée, le dispositif comprenant au moins une tige-poussoir, au moins une bobine, qui comporte au moins une cavité, dans laquelle la tige-poussoir est reçue de manière mobile, ainsi qu'au moins une source de courant, qui alimente la bobine au moins temporairement en courant, la bobine ou la tige-poussoir étant disposée sur le système de pesée afin d'appliquer une force définie sur la cellule de pesée quand la bobine est traversée par du courant,
dans lequel
la source de courant est conçue de telle manière que la bobine est alimentée en courant pendant que l'appareil de traitement du sang est en fonctionnement, c'est-à-dire pendant le traitement du sang.

2. Appareil de traitement du sang selon la revendication 1, **caractérisé en ce que** la source de courant est conçue de telle manière que la bobine est alimentée en un courant variable dans le temps, le tracé de l'intensité de courant étant de préférence prévu de forme sinusoïdale.

3. Appareil de traitement du sang selon l'une des revendications précédentes, **caractérisé en ce que** la source de courant est conçue de telle manière que la bobine est alimentée en courant en continu.

4. Appareil de traitement du sang selon l'une des revendications précédentes, **caractérisé en ce que** le dispositif comprend au moins une unité d'évaluation, qui est conçue pour mettre le signal mesuré par la cellule de pesée en rapport avec l'intensité de courant avec laquelle la bobine est alimentée.

5. Appareil de traitement du sang selon l'une des revendications précédentes, **caractérisé en ce que** le dispositif comprend au moins une unité d'évaluation, qui est conçue pour soustraire un signal utile du signal mesuré du côté de la cellule de pesée et mettre la différence entre les deux signaux en rapport avec l'intensité de courant avec laquelle la bobine est alimentée.

6. Procédé de contrôle d'un système de pesée d'un appareil de traitement du sang, en particulier d'un appareil de dialyse, dans lequel le système de pesée comporte au moins une cellule de pesée, et au moins une tige-poussoir et au moins une bobine sont prévues, ladite bobine comportant au moins une cavité, dans laquelle la tige-poussoir est reçue de manière mobile, la bobine ou la tige-poussoir étant disposée sur le système de pesée, le procédé comprenant l'alimentation en courant de la bobine ainsi que la détection du signal émis par la cellule de pesée,
dans lequel
la bobine est alimentée en courant pendant que l'appareil de traitement du sang est en fonctionnement, c'est-à-dire pendant le traitement du sang.

7. Procédé selon la revendication 6, **caractérisé en ce que** la bobine est alimentée en un courant variable dans le temps.

8. Procédé selon la revendication 6 ou 7, **caractérisé en ce que** le tracé de l'intensité de courant, avec laquelle la bobine est alimentée, est de forme sinusoïdale dans le temps.

9. Procédé selon l'une des revendications 6 à 8, **caractérisé en ce que** la bobine est alimentée en courant en continu.

10. Procédé selon l'une des revendications 6 à 9, **caractérisé en ce que** le signal mesuré par la cellule de pesée est mis en rapport avec l'intensité de courant, avec laquelle la bobine est alimentée.

11. Procédé selon l'une des revendications 6 à 10, **caractérisé en ce qu'**un signal utile est soustrait du signal mesuré du côté de la cellule de pesée et la différence entre les deux signaux est mise en rapport avec l'intensité de courant avec laquelle la bobine est alimentée.
